# EUROPEAN PATENT APPLICATION

(11) **EP 4 748 663 A1**
(43) Date of publication of application: **27.05.2026**
(21) Application number: 24215226.2
(22) Date of filing: 25.11.2024
(51) Int. Cl.: B60T 7/12, B60T 8/1755, B60W 10/12, B60W 10/18, B60W 30/045

(54) **VEHICLE DIFFERENTIAL LOCK HANDLING**

(71) Applicant: Volvo Truck Corporation, 405 08 Göteborg (SE)
(72) Inventor: Strängberg, Martin, 417 66 Göteborg (SE); Wölfinger, Alexander, 442 65 Marstrand (SE); Rakholia, Meet Vitthalbhai, 431 34 Mölndal (SE); Groth, Björn, 417 29 Göteborg (SE)
(74) Representative: Valea AB

(57) **Abstract**

A computer system comprising processing circuitry configured to handle one or more differential locks of a vehicle (1) comprising two or more axles, wherein at least a first differential lock (2) supports engagement/disengagement of differential locking of a left-hand side wheel (3) and a right-hand side wheel (4) of at least a first drive axle (5) of the vehicle. The processing circuitry is further configured to: determine that at least said first differential lock is engaged; provide brake instruction data instructing the vehicle to apply at least a first pulse brake to a left-hand side wheel (6) and a right-hand side wheel (7) of an other axle (8) of the vehicle non-driven and/or with a differential lock not engaged, the at least first pulse brake being of a predeterminable time duration and brake force; determine a respective wheel speed deceleration of the left-hand side and right-hand side wheels of the other axle; and in response to a deviation between the wheel speed decelerations fulfilling predeterminable deviation criteria, provide disengagement instruction data instructing the vehicle to disengage at least the first differential lock.

## Description

### TECHNICAL FIELD

The disclosure relates generally to vehicle differential lock handling. In particular aspects, the disclosure relates to handling of one or more differential locks of a vehicle comprising two or more axles, at least a first differential lock supporting engagement/disengagement of differential locking of a left-hand side wheel and a right-hand side wheel of at least a first drive axle of the vehicle. The disclosure can be applied to any feasible types of vehicles, such as heavy-duty vehicles, trucks, buses and construction equipment among other vehicle types, as well as passenger vehicles. Although the disclosure may be described with respect to a particular vehicle, the disclosure is not restricted to any particular vehicle.

### BACKGROUND

In the automotive field, to allow vehicle wheels to rotate at different speeds, it is commonly known to equip powered axles with differentials. The differential(s) may direct power to the wheel(s) of the axle(s) that is easiest to rotate, thus allowing different power to each wheel of the axle(s) according to its needs, for instance enabling a vehicle to turn corners efficiently. It is further known to lock the differential(s) - commonly referred to as differential lock/locking or diff lock - for instance when a vehicle is driving in difficult terrain, in slippery conditions such as on low friction surfaces, ice, sand and/or mud, uphill on gravel, etc, to assist in maintaining traction. Engaging differential lock(s) may force wheels to move at the same speed - such as for instance in case of an interwheel differential lock forcing wheels on a left-hand and right-hand side of a same axle to rotate at the same speed - thus pushing equal power through to said wheels regardless of traction. In other words, to improve traction such as when friction is different for left- and right-hand side wheels, by locking the differential(s) wheel speeds of the left- and right-hand side wheels may become equal and torque can be transferred from the side with low friction to the side with high friction. Expressed differently, a differential lock may be seen as a traction control system which may prevent wheel spin.

Differential locks are, however, commonly not used at all times. The locking may negatively affect tyre wear as well as fuel consumption of the vehicle. Moreover, as steering is impacted by the locking such as making steering difficult, it may be preferable to disengage the differential lock(s) before e.g. sharp turns. In view thereof, differential locks may for instance be manually controlled and/or handled, such as engaged/disengaged by a driver of the vehicle. In other implementations, differential locks may be automatically engaged, such as when the driving wheels rotate at different speeds, typically when there is a relatively large wheel speed difference. Correspondingly, differential lock(s) may then be automatically disengaged, such as after a predetermined amount of time and then engaged again if needed. Such an automatic disengagement approach with potentially plural or numerous re-engagements of the differential lock(s) may, however, potentially have a negative effect in that it may lead to wear of the mechanical parts engaging the differential lock(s), a need for torque reduction in order to sync wheel speeds, driver discomfort in - potentially repeated - disengagement/re-engagement of the differential lock(s), etc.

There is accordingly room for improvement when it comes to automatic disengagement of vehicle differential locks.

### SUMMARY

According to a first aspect of the disclosure, there is provided a computer system comprising processing circuitry configured to handle one or more differential locks of a vehicle comprising two or more axles, wherein at least a first differential lock supports engagement/disengagement of differential locking of a left-hand side wheel and a right-hand side wheel of at least a first drive axle of the vehicle.

The processing circuitry is further configured to determine that at least said first differential lock is engaged.

Moreover, the processing circuitry is further configured to provide brake instruction data instructing the vehicle to apply at least a first pulse brake to a left-hand side wheel and a right-hand side wheel of an other axle of said vehicle non-driven and/or with a differential lock not engaged, which at least first pulse brake is of a predeterminable time duration and brake force.

Furthermore, the processing circuitry is further configured to determine a respective wheel speed deceleration of the left-hand side and right-hand side wheels of said other axle.

Moreover, the processing circuitry is further configured to, in response to a deviation between the wheel speed decelerations fulfilling predeterminable deviation criteria, provide disengagement instruction data instructing the vehicle to disengage at least the first differential lock.

The first aspect of the disclosure may seek to provide an approach for one or more differential locks to remain engaged until considered, deemed and/or determined no longer needed, required and/or preferred, without having to disengage and potentially re-engage the differential lock(s) plural or numerous times. Accordingly, with automatic handling of disengagement of vehicle differential lock(s) in accordance with the introduced concept, differential lock(s) may remain engaged until considered, deemed and/or determined no longer needed, required and/or preferred, which subsequently may translate into less wear of mechanical parts engaging the differential lock(s), avoidance of - potentially repeated - torque reduction potentially required for wheel speeds syncing, and/or decreased driver discomfort, etc., for instance as compared with solutions of the prior art.

Since the processing circuitry is configured to handle one or more differential locks of a vehicle comprising two or more axles, wherein at least a first differential lock supports engagement/disengagement of differential locking of a left-hand side wheel and a right-hand side wheel of at least a first drive axle of the vehicle, there may controlled - and/or provided instructions to control - one or more differential locks of - and/or one or more differential locks associated with - one or more drive axles of a vehicle, out of which at least one out of said drive axles is an interwheel axle and which vehicle further may comprise one or more non-driven axles.

Furthermore, since the processing circuitry further is configured to determine that at least said first differential lock is engaged, there is established, derived and/or detected that one or more differential locks of and/or associated with one or more drive axles - at least the first differential lock of the at least first drive axle - is locked, such as currently locked.

Moreover, since the processing circuitry further is configured to provide brake instruction data instructing the vehicle to apply at least a first pulse brake to a left-hand side wheel and a right-hand side wheel of an other axle of the vehicle non-driven and/or with a differential lock not engaged, which at least first pulse brake is of a predeterminable time duration and brake force, there is provided, generated and/or initiated data instructing - for instance to a brake-controlling arrangement of - the vehicle to apply and/or activate one or more short brakes of predeterminable force and duration - such as brief and/or light enough to have little or no effect on other vehicle systems and/or go unnoticed by a potential vehicle occupant - to a respective left- and right-hand side wheel of an non-driven axle - for instance a front axle - of said vehicle and/or of an axle thereof which has, comprises and/or is associated with a differential lock - e.g. currently - not engaged. Thereby, at least a first relatively short and soft brake force may be applied to left- and right-hand side wheels of a non-driven axle of the vehicle or a drive axle thereof with a non-engaged and/or non-locked differential lock, which axle differs from the at least first drive axle determined to have an engaged differential lock.

Furthermore, since the processing circuitry further is configured to determine a respective wheel speed deceleration of the left-hand side and right-hand side wheels of said other axle, there is determined, monitored, derived and/or calculated respective deceleration speed - during the applied pulse brake(s) - of the left- and right-hand side wheels of the non-driven axle or the axle with a non-locked differential lock. Thereby, a left-hand side wheel speed deceleration for the left-hand wheel and correspondingly a right-hand side wheel speed deceleration for the right-hand wheel may be established, which respective wheel speed decelerations may differ and subsequently may be compared. A relatively large deviation between the left-hand side wheel speed deceleration and right-hand side wheel speed deceleration of the other axle - i.e. of the non-driven axle or the axle with a non-locked differential lock - may indicate that differential lock(s) of the drive axle(s) is needed, required and/or preferred, whereas a relatively small deviation may indicate that disengagement thereof may be needed, required and/or preferred.

Moreover, since the processing circuitry further is configured to, in response to a deviation between the wheel speed decelerations fulfilling predeterminable deviation criteria, provide disengagement instruction data instructing said vehicle to disengage at least the first differential lock, there is - upon a deviation and/or difference between the left-hand side wheel speed deceleration and the right-hand side wheel speed deceleration fulfilling set adjustable criteria such as a deviation between the two being lower than a set limit - provided, generated and/or initiated data instructing - for instance to a differential lock-controlling arrangement of - the vehicle to disengage and/or unlock at least the first differential lock of the at least first drive axle. Thereby, by establishing that the deviation between the left-hand side wheel speed deceleration and the right-hand side wheel speed deceleration of the non-driven axle or axle with a non-locked differential lock, fulfils the set criteria, which criteria for instance may comprise threshold(s) and/or limit(s) representative of differential lock engagement being considered, deemed and/or determined no longer needed, required and/or preferred, one or more differential lock(s) of drive axles - differing from the axle for which the speed wheel speed deceleration was determined - may be instructed to be disengaged. Accordingly, with the introduced concept, monitoring from braking of wheels of a **non-driven** and/or **non-engaged** axle may provide input to determine when to appropriately and/or in a timely manner disengage differential locks(s) of **drive** axle(s), whereby commonly known repeated disengagement and re-engagement of differential locks consequently may be avoided.

Optionally in some examples, including in at least one preferred example, fulfilling deviation criteria comprises a difference between the wheel speed decelerations being below a predeterminable threshold. A technical benefit may include that the deviation criteria may be represented by and/or be implemented in the form of at least a first adjustable predeterminable threshold and/or limit - for instance lying in the range of 2-15 km/h - below which a difference between the left-hand side wheel speed deceleration and the right-hand side wheel speed deceleration represents there being considered, deemed and/or determined to no longer be needed, required and/or preferred, engagement of one or more of the vehicle's drive axle differential lock(s).

Optionally in some examples, including in at least one preferred example, the deviation criteria are set to compensate for various degrees of vehicle turning. A technical benefit may include that the deviation criteria may vary with - and/or there may be compensated for and/or taken into consideration such as added a compensation for - an expected difference between the left-hand side wheel speed deceleration and the right-hand side wheel speed deceleration inherited from the vehicle turning, e.g. corners.

Optionally in some examples, including in at least one preferred example, said other axle comprises - and/or is - a front axle of the vehicle. A technical benefit may include that the axle of which wheels at least a first pulse brake is applied and from which the left-hand side wheel speed deceleration and the right-hand side wheel speed decelerations are monitored and compared, may be represented by a - e.g. non-driven - front axle common in vehicles e.g. heavy-duty vehicles such as trucks.

Optionally in some examples, including in at least one preferred example, a brake force of the at least first pulse brake is within a predeterminable range from a minimum brake force - and/or a time duration of said at least first pulse brake is within a predeterminable range from a shortest time duration - that the vehicle can apply to the left-hand side and right-hand side wheels of the other axle in order for wheel speed deceleration to be determined. A technical benefit may include that the force with which - for instance a braking arrangement of - the vehicle applies the pulse brake(s), is a minimum force - and/or deviates less than a predeterminable extent from such a minimum force - at which a wheel speed deceleration may be detectable. Additionally or alternatively, a technical benefit may include that a time duration during which - for instance a braking arrangement of - the vehicle applies the pulse brake(s), is a shortest time duration - and/or deviates less than a predeterminable period of time from such a shortest time duration - during which wheel speed deceleration may be monitored in order to determine wheel speed deceleration. Thereby, for instance other vehicle systems and/or potential vehicle occupant(s) may be affected at a minimum.

Optionally in some examples, including in at least one preferred example, the at least first pulse brake comprises a predeterminable number of pulse brakes, e.g. at least three pulse brakes. A technical benefit may include that rather than applying a sole pulse brake, plural number of pulse brakes may be applied for gathering of wheel speed deceleration measurements. Thereby, there is enabled for shorter duration of respective pulse brake duration and/or a robust approach, where for instance measurements considered erroneous may be discarded.

According to a second aspect of the disclosure, there is provided a vehicle - for instance a heavy-duty vehicle such as a truck - comprising and/or being controlled by the computer system according to the first aspect.

According to a third aspect of the disclosure, there is provided a computer-implemented method for handling one or more differential locks of a vehicle comprising two or more axles, wherein at least a first differential lock supports engagement/disengagement of differential locking of a left-hand side wheel and a right-hand side wheel of at least a first drive axle of t vehicle.

The method comprises, by processing circuitry of a computer system, determining that at least the first differential lock is engaged.

The method further comprises, by the processing circuitry, providing brake instruction data instructing the vehicle to apply at least a first pulse brake to a left-hand side wheel and a right-hand side wheel of an other axle of the vehicle non-driven and/or with a differential lock not engaged, wherein the at least first pulse brake is of a predeterminable time duration and brake force.

Moreover, the method comprises, by the processing circuitry, determining a respective wheel speed deceleration of the left-hand side and right-hand side wheels of said other axle.

Furthermore, the method further comprises, by the processing circuitry, in response to a deviation between the wheel speed decelerations fulfilling predeterminable deviation criteria, providing disengagement instruction data instructing the vehicle to disengage at least the first differential lock.

Optionally in some examples, including in at least one preferred example, fulfilling deviation criteria comprises a difference between the wheel speed decelerations being below a predeterminable threshold.

Optionally in some examples, including in at least one preferred example, the other axle comprises - and/or is - a front axle of the vehicle.

Optionally in some examples, including in at least one preferred example, a brake force of the at least first pulse brake is within a predeterminable range from a minimum brake force - and/or a time duration of the at least first pulse brake is within a predeterminable range from a shortest time duration - that the vehicle can apply to the left-hand side and right-hand side wheels of the other axle in order for wheel speed deceleration to be determined.

Optionally in some examples, including in at least one preferred example, the at least first pulse brake comprises a predeterminable number of pulse brakes, e.g. at least three pulse brakes.

The second and third aspects may correspond to any of the features, examples, and/or benefits of the first aspect and vice versa.

The disclosed aspects, examples (including any preferred examples), and/or accompanying claims may be suitably combined with each other as would be apparent to anyone of ordinary skill in the art. Additional features and advantages are disclosed in the following description, claims, and drawings, and in part will be readily apparent therefrom to those skilled in the art or recognized by practicing the disclosure as described herein.

There are also disclosed herein computer systems, control units, code modules, computer-implemented methods, computer readable media, and computer program products associated with the above discussed technical benefits.

### BRIEF DESCRIPTION OF THE DRAWINGS

Examples are described in more detail below with reference to the appended drawings.
**FIG. 1** is an exemplary vehicle according to an example.
**FIG. 2** depicts the vehicle of FIG. 1 in further detail according to an example.
**FIG. 3** is an exemplary flow chart of a computer-implemented method for handling one or more differential locks of a vehicle according to an example.
**FIG. 4** is a schematic diagram of an exemplary computer system for implementing examples disclosed herein, according to an example.

### DETAILED DESCRIPTION

The detailed description set forth below provides information and examples of the disclosed technology with sufficient detail to enable those skilled in the art to practice the disclosure.

Examples herein may relate to improvement when it comes to automatic disengagement of vehicle differential locks. With the introduced concept, there is provided an approach for one or more differential locks to remain engaged until considered, deemed and/or determined no longer needed, required and/or preferred, without having to disengage and potentially re-engage the differential lock(s) plural or numerous times. Accordingly, with automatic handling of disengagement of vehicle differential lock(s) in accordance with the introduced concept, differential lock(s) may remain engaged until considered, deemed and/or determined no longer needed, required and/or preferred, which subsequently may translate into less wear of mechanical parts engaging the differential lock(s), avoidance of - potentially repeated - torque reduction potentially required for wheel speeds syncing, and/or decreased driver discomfort etc., for instance as compared with solutions of the prior art.

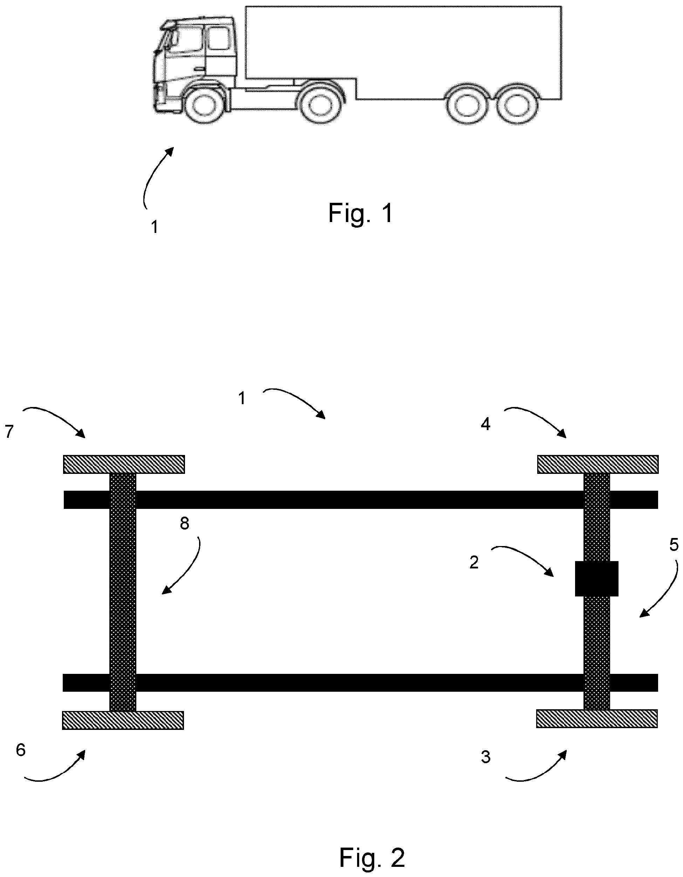

**FIG. 1** illustrates an exemplary **vehicle 1** according to an example. The vehicle 1 may be any feasible vehicle - for instance a heavy-duty vehicle such as a truck - comprising two or more axles as illustrated in an exemplifying manner in FIG. 2, which depicts the vehicle of FIG. 1 in further detail according to an example.

The vehicle 1 comprises one or more differential locks, wherein at least a **first differential lock 2** supports - and/or is arranged to enable - engagement/disengagement of differential locking of a **left-hand side wheel 3** and a **right-hand side wheel 4** - here as seen in a forward direction of the vehicle 1 - of at least a **first drive axle 5** of the vehicle 1. The one or more differential locks may refer to and/or be represented by any feasible - for instance commonly known - differential locks supporting - and/or being arranged to enable - engagement/disengagement of differential locking of wheels of the vehicle 1. Moreover, the at least first drive axle 5 may refer to a sole - for instance interwheel - drive axle, or two or more drive axles respectively equipped with and/or being associated with differential locks, depending on implementation.

Further illustrated in an exemplifying manner is a **left-hand side wheel 6** and a **right-hand side wheel 7** of an **other axle 8.** The other axle 8 - which may be referred to as a non-driven and/or non-engaged axle - may be positioned at any feasible position in the vehicle 1. In the shown example, the other axle 8 is represented by a non-driven axle void from a differential lock, more specifically an exemplifying front axle of the vehicle 1. According to other examples, the other axle 8 may be represented by a differential lock-equipped axle.

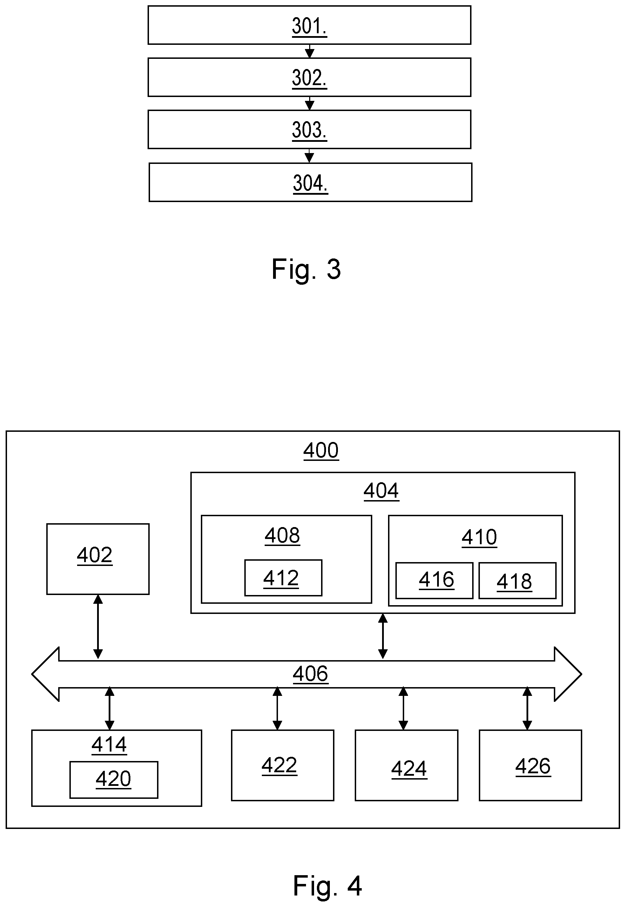

Examples herein may be performed by a **computer system 400** and/or a **processing circuitry 402** therein, illustrated in **Fig. 4** further on. The computer system 400 and/or the processing circuitry 402 therein may be comprised in the vehicle 1. In some examples, the computer system 400 and/or the processing circuitry 402 may be or may comprise an Electronic Control Unit (ECU). In some examples, the computer system 400 and/or the processing circuitry 402 therein may be communicatively coupled with, and/or capable of controlling any suitable entity of the vehicle 1. For example, the computer system 400 and/or the processing circuitry 402 may be able to instruct a vehicle - or a brake controlling arrangement thereof - to apply braking and/or instruct said vehicle - or a differential lock-controlling arrangement thereof - to disengage differential lock(s), as will be further described in the following.

**FIG. 3** is an exemplary flow chart of a computer-implemented method for handling one or more differential locks of a vehicle 1 according to an example. As previously discussed, the vehicle 1 comprises two or more axles. Moreover, as similarly previously discussed, at least a first differential lock 2 supports engagement/disengagement of differential locking of a left-hand side wheel 3 and a right-hand side wheel 4 of at least a first drive axle 5 of the vehicle 1. The actions described below may be performed by the computer system 400 and/or the processing circuitry 402 therein, in any suitable order.

### Action 301

The method comprises determining that at least the first differential lock 2 is engaged. Such a determination may for instance be based on information and/or data gathered and/or derived from - for instance a differential lock-controlling arrangement of - the vehicle 1. It is to be noted that the vehicle 1 may comprise more than a sole drive axle 5, and accordingly that further drive axles may have and/or be associated with engaged differential locks.

### Action 302

The method further comprises providing brake instruction data instructing the vehicle 1 to apply at least a first pulse brake to a left-hand side wheel 6 and a right-hand side wheel 7 of an other axle 8 of the vehicle 1, which axle 8 is non-driven and/or with a differential lock not engaged, wherein the at least first pulse brake is of a predeterminable time duration and brake force. The brake instruction data - i.e. brake instruction - may be provided to - for instance a brake-controlling arrangement of - the vehicle 1 in any feasible manner, such as via a - e.g. commonly known - communication bus. The other axle 8, on the other hand, may be represented by and/or comprise any feasible non-driven axle of the vehicle 1 and/or a drive axle of the vehicle 1 which axle is equipped with and/or associated with a differential lock which - for instance currently - is not engaged. Optionally, the other axle 8 comprises - and/or is represented by - a front axle of the vehicle 1, such as a non-driven front axle. Furthermore, the at least first pulse brake may be represented by one, two or a series of - for instance relatively short and light - brake instances of a set brake force and time duration(s), applied to the left- and right-hand side wheels 6, 7 of the other axle 8. Optionally, the at least first pulse brake comprises a predeterminable number of pulse brakes, e.g. at least three pulse brakes., or at least five pulse brakes.

The brake force of the pulse brake or respective pulse brake is relatively soft, such as barely - or not at all - noticeable to a potential vehicle occupant and/or barely - or not at all - affecting other systems of the vehicle 1. Optionally, the brake force of the at least first pulse brake is within a predeterminable range from a minimum brake force that - for instance a brake-controlling arrangement of - the vehicle 1 can apply to the left-hand side and right-hand side wheels 6, 7 of the other axle 8 in order for wheel speed deceleration to be determined. Similarly, the duration of the pulse brake or respective pulse brakes are relatively brief, such as barely - or not at all - noticeable to a potential vehicle occupant and/or barely - or not at all - affecting other systems of the vehicle 1. Optionally, a time duration of the at least first pulse brake is within a predeterminable range from a shortest time duration that - for instance a brake-controlling arrangement of - the vehicle 1 can apply to the left-hand side and right-hand side wheels 6, 7 of the other axle 8 in order for wheel speed deceleration to be determined.

### Action 303

Moreover, the method further comprises determining a respective wheel speed deceleration of the left-hand side and right-hand side wheels 6, 7 of the other axle 8. Respective left- and right-hand side wheel speed deceleration resulting from the at least first pulse brake may be determined in any feasible manner, such as derived and/or deduced from measurements gathered with support from one or more - for instance commonly known - sensors supporting detecting and/or monitoring wheel speed and/or wheel speed deceleration. According to an example, in case of plural applied pulse brakes, respective left- and right-hand side wheel speed deceleration may be determined based on - and/or taking into consideration - measurements from and/or monitoring during said plural pulse brakes, such as determining a respective average, mean, and/or median value, and/or discarding measured wheel speed deceleration values deemed erroneous.

### Action 304

Furthermore, the method further comprises, in response to a deviation between the wheel speed decelerations fulfilling predeterminable deviation criteria, providing disengagement instruction data instructing the vehicle 1 to disengage at least the first differential lock 2. The disengagement instruction data - i.e. disengagement instruction - may be provided to - for instance a differential lock-controlling arrangement of - the vehicle 1 in any feasible manner, such as via a - e.g. commonly known - communication bus. The disengagement instruction may apply to and/or be applicable for the sole first differential lock 2 of the first drive axle 5, and potentially further also to one or more potential further differential locks of - and/or associated with - differing potential further drive axles of the vehicle 1. Moreover, an extent to which the wheel speed deceleration of the left-hand wheel 6 of the other axle 8 deviates from the wheel speed deceleration of the right-hand side 7 of said axle 8, may be determined, deduced and/or calculated in any feasible manner, such as by comparison of the two. The deviation criteria, on the other hand, may be represented by any feasible e.g. one or more thresholds, limits and/or criteria representative of differential lock engagement being considered, deemed and/or determined no longer needed, required and/or preferred. Optionally, fulfilling deviation criteria comprises a difference between the wheel speed decelerations being below a predeterminable threshold. In this case, the deviation criteria comprise a difference threshold applicable for subtracting the left-hand side wheel speed deceleration from the right-hand side wheel speed deceleration, or vice versa. Such a threshold may be set to any feasible value deemed relevant, for instance in the range of 2-15 km/h, below which differential lock engagement is considered, deemed and/or determined no longer needed, required and/or preferred. According to another example, the deviation criteria may comprise e.g. a threshold applicable for dividing the left-hand side wheel speed deceleration with the right-hand side wheel speed deceleration, or vice versa, with the threshold being set to a predeterminable range from e.g. 1, within which range differential lock engagement is considered, deemed and/or determined no longer needed, required and/or preferred. Further optionally, the deviation criteria may be set to compensate for various degrees of vehicle turning. In this case, the deviation criteria - such as e.g. thresholds, limits and/or criteria thereof - are set to vary with and/or be adapted for various degrees of the vehicle 1 turning. That is, turning of the vehicle 1 may - as commonly known - inevitably impose differing wheel speeds of wheels such as on the left- and right-hand sides of the vehicle 1. Such turn-imposed wheel speed differences may consequently be taken into consideration in comparison of the wheel speed deceleration of the left-hand side wheel 6 of the other axle 8 with the wheel speed deceleration of the right-hand side wheel 7 of the same axle 8, and consequently the deviation criteria set to compensate such turn-imposed wheel speed differences.

To summarize, and as were described above in further detail in conjunction with FIGS. 1-3, monitoring from braking of wheels of a **non-driven** and/or **non-engaged** axle may accordingly provide input to determine when to appropriately and/or in a timely manner disengage differential locks(s) of **drive** axle(s), whereby commonly known repeated disengagement and re-engagement of differential locks consequently may be avoided.

**FIG. 4** is a schematic diagram of a computer system 400 for implementing examples disclosed herein. The computer system 400 is adapted to execute instructions from a computer-readable medium to perform these and/or any of the functions or processing described herein. The computer system 400 may be connected (e.g., networked) to other machines in a LAN (Local Area Network), LIN (Local Interconnect Network), automotive network communication protocol (e.g., FlexRay), an intranet, an extranet, or the Internet. While only a single device is illustrated, the computer system 400 may include any collection of devices that individually or jointly execute a set (or multiple sets) of instructions to perform any one or more of the methodologies discussed herein. Accordingly, any reference in the disclosure and/or claims to a computer system, computing system, computer device, computing device, control system, control unit, electronic control unit (ECU), processor device, processing circuitry, etc., includes reference to one or more such devices to individually or jointly execute a set (or multiple sets) of instructions to perform any one or more of the methodologies discussed herein. For example, control system may include a single control unit or a plurality of control units connected or otherwise communicatively coupled to each other, such that any performed function may be distributed between the control units as desired. Further, such devices may communicate with each other or other devices by various system architectures, such as directly or via a Controller Area Network (CAN) bus, etc.

The computer system 400 may comprise at least one computing device or electronic device capable of including firmware, hardware, and/or executing software instructions to implement the functionality described herein. The computer system 400 may include processing circuitry 402 (e.g., processing circuitry including one or more processor devices or control units), a memory 404, and a system bus 406. The computer system 400 may include at least one computing device having the processing circuitry 402. The system bus 406 provides an interface for system components including, but not limited to, the memory 404 and the processing circuitry 402. The processing circuitry 402 may include any number of hardware components for conducting data or signal processing or for executing computer code stored in memory 404. The processing circuitry 402 may, for example, include a general-purpose processor, an application specific processor, a Digital Signal Processor (DSP), an Application Specific Integrated Circuit (ASIC), a Field Programmable Gate Array (FPGA), a circuit containing processing components, a group of distributed processing components, a group of distributed computers configured for processing, or other programmable logic device, discrete gate or transistor logic, discrete hardware components, or any combination thereof designed to perform the functions described herein. The processing circuitry 402 may further include computer executable code that controls operation of the programmable device.

The system bus 406 may be any of several types of bus structures that may further interconnect to a memory bus (with or without a memory controller), a peripheral bus, and/or a local bus using any of a variety of bus architectures. The memory 404 may be one or more devices for storing data and/or computer code for completing or facilitating methods described herein. The memory 404 may include database components, object code components, script components, or other types of information structure for supporting the various activities herein. Any distributed or local memory device may be utilized with the systems and methods of this description. The memory 404 may be communicably connected to the processing circuitry 402 (e.g., via a circuit or any other wired, wireless, or network connection) and may include computer code for executing one or more processes described herein. The memory 404 may include non-volatile memory 408 (e.g., read-only memory (ROM), erasable programmable read-only memory (EPROM), electrically erasable programmable read-only memory (EEPROM), etc.), and volatile memory 410 (e.g., random-access memory (RAM)), or any other medium which can be used to carry or store desired program code in the form of machine-executable instructions or data structures and which can be accessed by a computer or other machine with processing circuitry 402. A basic input/output system (BIOS) 412 may be stored in the non-volatile memory 408 and can include the basic routines that help to transfer information between elements within the computer system 400.

The computer system 400 may further include or be coupled to a non-transitory computer-readable storage medium such as the storage device 414, which may comprise, for example, an internal or external hard disk drive (HDD) (e.g., enhanced integrated drive electronics (EIDE) or serial advanced technology attachment (SATA)), HDD (e.g., EIDE or SATA) for storage, flash memory, or the like. The storage device 414 and other drives associated with computer-readable media and computer-usable media may provide non-volatile storage of data, data structures, computer-executable instructions, and the like.

Computer-code which is hard or soft coded may be provided in the form of one or more modules. The module(s) can be implemented as software and/or hard-coded in circuitry to implement the functionality described herein in whole or in part. The modules may be stored in the storage device 414 and/or in the volatile memory 410, which may include an operating system 416 and/or one or more program modules 418. All or a portion of the examples disclosed herein may be implemented as a computer program 420 stored on a transitory or non-transitory computer-usable or computer-readable storage medium (e.g., single medium or multiple media), such as the storage device 414, which includes complex programming instructions (e.g., complex computer-readable program code) to cause the processing circuitry 402 to carry out actions described herein. Thus, the computer-readable program code of the computer program 420 can comprise software instructions for implementing the functionality of the examples described herein when executed by the processing circuitry 402. In some examples, the storage device 414 may be a computer program product (e.g., readable storage medium) storing the computer program 420 thereon, where at least a portion of a computer program 420 may be loadable (e.g., into a processor) for implementing the functionality of the examples described herein when executed by the processing circuitry 402. The processing circuitry 402 may serve as a controller or control system for the computer system 400 that is to implement the functionality described herein.

The computer system 400 may include an input device interface 422 configured to receive input and selections to be communicated to the computer system 400 when executing instructions, such as from a keyboard, mouse, touch-sensitive surface, etc. Such input devices may be connected to the processing circuitry 402 through the input device interface 422 coupled to the system bus 406 but can be connected through other interfaces, such as a parallel port, an Institute of Electrical and Electronic Engineers (IEEE) 1394 serial port, a Universal Serial Bus (USB) port, an IR interface, and the like. The computer system 400 may include an output device interface 424 configured to forward output, such as to a display, a video display unit (e.g., a liquid crystal display (LCD) or a cathode ray tube (CRT)). The computer system 400 may include a communications interface 426 suitable for communicating with a network as appropriate or desired.

The operational actions described in any of the exemplary aspects herein are described to provide examples and discussion. The actions may be performed by hardware components, may be embodied in machine-executable instructions to cause a processor to perform the actions, or may be performed by a combination of hardware and software. Although a specific order of method actions may be shown or described, the order of the actions may differ. In addition, two or more actions may be performed concurrently or with partial concurrence.

Below follows a list of Examples 1-20 which may be combined with any one or more out of the above examples or actions, in any suitable manner.
**Example** 1. A computer system (400) comprising processing circuitry (402) configured to handle one or more differential locks of a vehicle (1) comprising two or more axles, wherein at least a first differential lock (2) supports engagement/disengagement of differential locking of a left-hand side wheel (3) and a right-hand side wheel (4) of at least a first drive axle (5) of said vehicle (1), wherein the processing circuitry (402) is further configured to:
   - determine that at least said first differential (2) lock is engaged;
   - provide brake instruction data instructing said vehicle (1) to apply at least a first pulse brake to a left-hand side wheel (6) and a right-hand side wheel (7) of an other axle (8) of said vehicle (1) non-driven and/or with a differential lock not engaged, said at least first pulse brake being of a predeterminable time duration and brake force;
   - determine a respective wheel speed deceleration of the left-hand side and right-hand side wheels (6, 7) of said other axle (8); and
   - in response to a deviation between the wheel speed decelerations fulfilling predeterminable deviation criteria, provide disengagement instruction data instructing said vehicle (1) to disengage at least the first differential lock (2).
**Example 2.** The computer system (400) of Example 1, wherein said fulfilling deviation criteria comprises a difference between the wheel speed decelerations being below a predeterminable threshold.
**Example 3.** The computer system (400) of Example 1 or 2, wherein said deviation criteria are set to compensate for various degrees of vehicle turning.
**Example 4.** The computer system (400) of any one of Examples 1-3, wherein said other axle (8) comprises - and/or is - a front axle of said vehicle (1).
**Example 5.** The computer system (400) of any one of Examples 1-4, wherein a brake force of said at least first pulse brake is within a predeterminable range from a minimum brake force - and/or a time duration of said at least first pulse brake is within a predeterminable range from a shortest time duration - that said vehicle (1) can apply to the left-hand side and right-hand side wheels (6, 7) of said other axle (8) in order for wheel speed deceleration to be determined.
**Example 6.** The computer system (400) of any one of Examples 1-5, wherein said at least first pulse brake comprises a predeterminable number of pulse brakes, e.g. at least three pulse brakes.
**Example 7.** A vehicle (1) comprising and/or being controlled by the computer system (400) of any one of Examples 1-6.
**Example 8.** A method for handling one or more differential locks of a vehicle (1) comprising two or more axles, wherein at least a first differential lock (2) supports engagement/disengagement of differential locking of a left-hand side wheel (3) and a right-hand side wheel (4) of at least a first drive axle (5) of said vehicle (1), the method comprising:
   - by processing circuitry (402) of a computer system (400), determining (301) that at least said first differential lock (2) is engaged;
   - by said processing circuitry (402), providing (302) brake instruction data instructing said vehicle (1) to apply at least a first pulse brake to a left-hand side wheel (6) and a right-hand side wheel (7) of an other axle (8) of said vehicle (1) non-driven and/or with a differential lock not engaged, said at least first pulse brake being of a predeterminable time duration and brake force;
   - by said processing circuitry (402), determining (303) a respective wheel speed deceleration of the left-hand side and right-hand side wheels (6, 7) of said other axle (8); and
   - by said processing circuitry (402), in response to a deviation between the wheel speed decelerations fulfilling predeterminable deviation criteria, providing disengagement instruction data instructing said vehicle (1) to disengage at least the first differential lock (2).
**Example 9.** The method of Example 8, wherein said fulfilling deviation criteria comprises a difference between the wheel speed decelerations being below a predeterminable threshold.
**Example 10.** The method of Example 8 or 9, wherein said deviation criteria are set to compensate for various degrees of vehicle turning.
**Example 11.** The method of any one of Examples 8-10, wherein said other axle (8) comprises - and/or is - a front axle of said vehicle (1).
**Example 12.** The method of any one of Examples 8-11, wherein a brake force of said pulse brake is within a predeterminable range from a minimum brake force - and/or a time duration of said pulse brake is within a predeterminable range from a shortest time duration - that said vehicle (1) can apply to the left-hand side and right-hand side wheels (6, 7) of said other axle (8) in order for wheel speed deceleration to be determined.
**Example 13.** The method of any one of Examples 8-12, wherein said at least first pulse brake comprises a predeterminable number of pulse brakes, e.g. at least three pulse brakes.
**Example 14.** A computer program product comprising program code for performing, when executed by the processing circuitry (402), the method of any of Examples 8-13.
**Example 15.** A non-transitory computer-readable storage medium comprising instructions, which when executed by the processing circuitry (402), cause the processing circuitry (402) to perform the method of any of Examples 8-13.
**Example 16.** The vehicle (1) of Example 7, wherein said fulfilling deviation criteria comprises a difference between the wheel speed decelerations being below a predeterminable threshold.
**Example 17.** The vehicle (1) of Example 7 or 16, wherein said deviation criteria are set to compensate for various degrees of vehicle turning.
**Example 18.** The vehicle (1) of any one of Examples 7, 16 or 17, wherein said other axle (8) comprises - and/or is - a front axle of said vehicle (1).
**Example 19.** The vehicle (1) of any one of Examples 7, 16-18, wherein a brake force of said at least first pulse brake is within a predeterminable range from a minimum brake force - and/or a time duration of said at least first pulse brake is within a predeterminable range from a shortest time duration - that said vehicle (1) can apply to the left-hand side and right-hand side wheels (6, 7) of said other axle (8) in order for wheel speed deceleration to be determined.
**Example 20.** The vehicle (1) of any one of Examples 7, 16-19, wherein said at least first pulse brake comprises a predeterminable number of pulse brakes, e.g. at least three pulse brakes.

The terminology used herein is for the purpose of describing particular aspects only and is not intended to be limiting of the disclosure. As used herein, the singular forms "a," "an," and "the" are intended to include the plural forms as well, unless the context clearly indicates otherwise. As used herein, the term "and/or" includes any and all combinations of one or more of the associated listed items. It will be further understood that the terms "comprises," "comprising," "includes," and/or "including" when used herein specify the presence of stated features, integers, actions, steps, operations, elements, and/or components, but do not preclude the presence or addition of one or more other features, integers, actions, steps, operations, elements, components, and/or groups thereof.

It will be understood that, although the terms first, second, etc., may be used herein to describe various elements, these elements should not be limited by these terms. These terms are only used to distinguish one element from another. For example, a first element could be termed a second element, and, similarly, a second element could be termed a first element without departing from the scope of the present disclosure.

Relative terms such as "below" or "above" or "upper" or "lower" or "horizontal" or "vertical" may be used herein to describe a relationship of one element to another element as illustrated in the Figures. It will be understood that these terms and those discussed above are intended to encompass different orientations of the device in addition to the orientation depicted in the Figures. It will be understood that when an element is referred to as being "connected" or "coupled" to another element, it can be directly connected or coupled to the other element, or intervening elements may be present. In contrast, when an element is referred to as being "directly connected" or "directly coupled" to another element, there are no intervening elements present.

Unless otherwise defined, all terms (including technical and scientific terms) used herein have the same meaning as commonly understood by one of ordinary skill in the art to which this disclosure belongs. It will be further understood that terms used herein should be interpreted as having a meaning consistent with their meaning in the context of this specification and the relevant art and will not be interpreted in an idealized or overly formal sense unless expressly so defined herein.

It is to be understood that the present disclosure is not limited to the aspects described above and illustrated in the drawings; rather, the skilled person will recognize that many changes and modifications may be made within the scope of the present disclosure and appended claims. In the drawings and specification, there have been disclosed aspects for purposes of illustration only and not for purposes of limitation, the scope of the disclosure being set forth in the following claims.

## Claims

1. A computer system (400) comprising processing circuitry (402) configured to handle one or more differential locks of a vehicle (1) comprising two or more axles, wherein at least a first differential lock (2) supports engagement/disengagement of differential locking of a left-hand side wheel (3) and a right-hand side wheel (4) of at least a first drive axle (5) of said vehicle (1), wherein the processing circuitry (402) is further configured to:
- determine that at least said first differential (2) lock is engaged;
- provide brake instruction data instructing said vehicle (1) to apply at least a first pulse brake to a left-hand side wheel (6) and a right-hand side wheel (7) of an other axle (8) of said vehicle (1) non-driven and/or with a differential lock not engaged, said at least first pulse brake being of a predeterminable time duration and brake force;
- determine a respective wheel speed deceleration of the left-hand side and right-hand side wheels (6, 7) of said other axle (8); and
- in response to a deviation between the wheel speed decelerations fulfilling predeterminable deviation criteria, provide disengagement instruction data instructing said vehicle (1) to disengage at least the first differential lock (2).

2. The computer system (400) of claim 1, wherein said fulfilling deviation criteria comprises a difference between the wheel speed decelerations being below a predeterminable threshold.

3. The computer system (400) of claim 1 or 2, wherein said deviation criteria are set to compensate for various degrees of vehicle turning.

4. The computer system (400) of any one of claims 1-3, wherein said other axle (8) comprises - and/or is - a front axle of said vehicle (1).

5. The computer system (400) of any one of claims 1-4, wherein a brake force of said at least first pulse brake is within a predeterminable range from a minimum brake force - and/or a time duration of said at least first pulse brake is within a predeterminable range from a shortest time duration - that said vehicle (1) can apply to the left-hand side and right-hand side wheels (6, 7) of said other axle (8) in order for wheel speed deceleration to be determined.

6. The computer system (400) of any one of claims 1-5, wherein said at least first pulse brake comprises a predeterminable number of pulse brakes, e.g. at least three pulse brakes.

7. A vehicle (1) comprising and/or being controlled by the computer system (400) of any one of claims 1-6.

8. A method for handling one or more differential locks of a vehicle (1) comprising two or more axles, wherein at least a first differential lock (2) supports engagement/disengagement of differential locking of a left-hand side wheel (3) and a right-hand side wheel (4) of at least a first drive axle (5) of said vehicle (1), the method comprising:
- by processing circuitry (402) of a computer system (400), determining (301) that at least said first differential lock (2) is engaged;
- by said processing circuitry (402), providing (302) brake instruction data instructing said vehicle (1) to apply at least a first pulse brake to a left-hand side wheel (6) and a right-hand side wheel (7) of an other axle (8) of said vehicle (1) non-driven and/or with a differential lock not engaged, said at least first pulse brake being of a predeterminable time duration and brake force;
- by said processing circuitry (402), determining (303) a respective wheel speed deceleration of the left-hand side and right-hand side wheels (6, 7) of said other axle (8); and
- by said processing circuitry (402), in response to a deviation between the wheel speed decelerations fulfilling predeterminable deviation criteria, providing disengagement instruction data instructing said vehicle (1) to disengage at least the first differential lock (2).

9. The method of claim 8, wherein said fulfilling deviation criteria comprises a difference between the wheel speed decelerations being below a predeterminable threshold.

10. The method of claim 8 or 9, wherein said deviation criteria are set to compensate for various degrees of vehicle turning.

11. The method of any one of claims 8-10, wherein said other axle (8) comprises - and/or is - a front axle of said vehicle (1).

12. The method of any one of claims 8-11, wherein a brake force of said pulse brake is within a predeterminable range from a minimum brake force - and/or a time duration of said pulse brake is within a predeterminable range from a shortest time duration - that said vehicle (1) can apply to the left-hand side and right-hand side wheels (6, 7) of said other axle (8) in order for wheel speed deceleration to be determined.

13. The method of any one of claims 8-12, wherein said at least first pulse brake comprises a predeterminable number of pulse brakes, e.g. at least three pulse brakes.

14. A computer program product comprising program code for performing, when executed by the processing circuitry (402), the method of any of claims 8-13.

15. A non-transitory computer-readable storage medium comprising instructions, which when executed by the processing circuitry (402), cause the processing circuitry (402) to perform the method of any of claims 8-13.
